# EUROPÄISCHE PATENTSCHRIFT

(11) **EP 0 525 402 B1**
(45) Veröffentlichungstag und Bekanntmachung des Hinweises auf die Patenterteilung: **28.12.1994**
(21) Anmeldenummer: 92110921.1
(22) Anmeldetag: 27.06.1992
(51) Int. Cl.: A01B 59/048

(54) **Schlepper mit Fronthubwerk**
Tractor with front-mounted lifting means
Tracteur avec dispositif de levage à l'avant

(30) Priorität: 31.07.1991 DE 4125406
(43) Veröffentlichungstag der Anmeldung: 03.02.1993
(73) Patentinhaber: STEYR-DAIMLER-PUCH AKTIENGESELLSCHAFT, 1010 Wien (AT)
(72) Erfinder: Pretzler, Rudolf, Dipl.-Ing., A-8600 Bruck/Mur (AT)

(56) Entgegenhaltungen:
- DE-A- 3 601 619
- DE-C- 975 103
- DE-C- 3 022 887

## Beschreibung

Die Erfindung handelt von einem Schlepper mit Fronthubwerk für ein Arbeitsgerät, wobei der Schlepper aus einem Schlepperkörper und einer um eine Längsachse pendelnd an diesem gelagerten Vorderachse besteht und das Fronthubwerk aus Unterlenkern mit vorderachsfester Schwenkachse und mindestens einem Oberlenker besteht, der ein Glied des das Hubwerk bildenden Gelenkviereckes ist.

Schlepper werden mit Fronthubwerken ausgerüstet, um auch vor dem Schlepper Arbeitsgeräte anbringen zu können. Diese Arbeitsgeräte sind häufig Mähwerke, mit erheblichem Gewicht und großer Arbeitsbreite. Bei solchen Fronthubwerken treten zwei Probleme auf, die es bei Heckhubwerken nicht gibt.

Wenn das Fronthubwerk am Traktorkörper gelagert ist, wie etwa in der DE-C 30 22 887 beschrieben, und die Vorderachse pendelnd am Traktorkörper aufgehängt ist, ist das Anbaugerät parallel zur Hinterachse ausgerichtet, die aber dem Gerät um die sogenannte Führungslänge hinterherläuft. Das hat zur Folge, daß das Gerät bei unebener, insbesondere verwundener, Arbeitsfläche nicht parallel zum eben bearbeiteten Teil dieser Arbeitsfläche ist. Dadurch ist eine zusätzliche Schwenkachse oder ein entsprechender Pendelausgleich am Frontgerät notwendig.

Aus der DE-A 36 01 619, von der die Erfindung ausgeht, ist es bekannt, zur Verkürzung dieser Führungslänge die Unterlenker des Hubwerkes an der Vorderachse aufzuhängen. Dadurch ist die Führungslänge zwar verringert, aber um den Preis mehrerer Nachteile: Da die Lenker des Hubwerkes aus kinematischen Gründen und aus Normungsgründen eine bestimmte Mindestlänge haben, steht das Gerät nach vorne sehr weit vor, wodurch die Führungslänge noch immer größer als notwendig ist und wodurch außerdem der Schwerpunkt des Anbaugerätes sehr weit vor dem Traktor liegt. Das führt vor allem bei einem schweren Gerät zu einer ungünstigen Achslastverteilung und erschwert Fahrtrichtungsänderungen. Weiters wird der Schwenkzapfen der Vorderachse dadurch stärker belastet, was eine verstärkte Konstruktion der Vorderachsaufhängung notwendig macht.

Das zweite bei Fronthubwerken auftretende Problem besteht darin, daß das Gerät geschoben wird. Dadurch besteht die Gefahr, daß sich das Anbaugerät bei Kollision mit einem Hindernis, etwa einem Grenzstein, in den Boden bohrt. Das bedeutet Beschädigung von Anbaugerät und Schlepper und Unfallgefahr. Versuche, dem mit einem gesteuerten Schnellaushub entgegenzuwirken, sind am Zeitverlauf eines solchen Zusammenstosses und an den für ein ausreichend schnelles Ausheben erforderlichen Kräften gescheitert.

Es ist daher Ziel der Erfindung, einen gattungsgemäßen Schlepper so zu gestalten, daß sich das Anbaugerät durch die bei einer Kollision auftretende Horizontalkraft schnell und sicher von der Arbeitsfläche abhebt und daß mit möglichst geringem technischem Aufwand Achslastverteilung und Lenkverhalten des Schleppers möglichst wenig in Mitleidenschaft gezogen werden.

Zur Lösung dieser Aufgabe ist erfindungsgemäß die Schwenkachse der Unterlenker in Fahrtrichtung hinter und tiefer als der Radachsenmittelpunkt der Vorderachse angeordnet (Anspruch 1).

Durch diese Anordnung der Schwenkachse kann das Gelenkviereck so bemessen werden, daß der Momentanpol entweder hinter dem Arbeitsgerät und unter der Arbeitsfläche oder vor dem Arbeitsgerät und über der Arbeitsfläche liegt. Der Momentanpol ist nach den Regeln der Kinematik der Schnittpunkt von oberem und unterem Lenker. In beiden Fällen erzeugt eine von vorne auf das Arbeitsgerät wirkende Kraft, bzw. ein Stoß, ein selbsttätiges Ausweichen des Arbeitsgerätes nach oben durch Schwenken um den Momentanpol. Damit ist sichergestellt, daß es sich nicht in den Boden bohrt, mit den erwähnten schädlichen Folgen. Allgemeiner ausgedrückt gelingt es auf diese Weise, den Unterlenker schlepperseitig so zu lagern, daß sein anderes geräteseitiges Ende höher als das schlepperseitige liegt, wodurch bei erhöhtem Widerstand des Arbeitsgerätes - z. B. bei hoher Fahrgeschwindigkeit, eine Reduzierung des Auflagedruckes des Mähgerätes und damit ein geringer Fahrwiderstand erreicht wird.

Ein weiterer wesentlicher Vorteil dieser Anordnung der Schwenkachse der Unterlenker besteht darin, daß bei normaler Länge der Unterlenker das Anbaugerät weniger weit nach vorne vorsteht und sein Schwerpunktsabstand von der Vorderachse somit relativ gering ist, was der Raddruckverteilung und der Hangstabilität in Schichtlinie (bei der Fahrt entlang der Schichtlinie eines Hanges übt das Anbaugerät ein Drehmoment um die Hochachse auf den Schlepper aus, das mit der Länge des Hebelarmes ansteigt) zugutekommt und eine weitere Verringerung der Führungslänge ermöglicht.

Nach einem Merkmal der Erfindung schneiden einander die Verlängerung von Unterlenker und Oberlenker - wenn sich das Anbaugerät in Arbeitsstellung befindet - in einem Punkt, der hinter und unter dem Arbeitsgerät liegt (Anspruch 2).

Dieser Punkt ist der Momentanpol und es tritt das erwünschte selbsttätige Ausweichen des Arbeitsgerätes nach oben auf und es können auch sehr große Arbeitsgeräte mit weit auseinanderliegenden Anlenkpunkten für Ober- und Unterlenker angespannt werden.

In einer bevorzugten Ausführungsform schneiden einander die Verlängerung von Unterlenker und Oberlenker - wenn sich das Anbaugerät in Arbeitsstellung befindet - in einem Punkt, der vor und über dem Arbeitsgerät liegt (Anspruch 3).

Bei dieser Lage des Momentanpoles sind, wie sich durch Aufstellen eines Kräfteplanes nach CULMANN zeigt, die Stabkräfte in den Lenkern gering. Das bedeutet nicht nur, daß bei Kollisionen die Lenker und damit deren Schwenklager weniger stark beansprucht sind, sondern daß auch das Arbeitsgerät selbst im Kollisionsfall einem geringeren Beschädigungsrisiko ausgesetzt ist.

In Weiterbildung der Erfindung ist die Schwenkachse an einem Hubwerksrahmen ausgebildet, welcher mit der Vorderachse verbunden und in einiger Entfernung hinter dieser um die Längsachse schwenkbar gelagert ist (Anspruch 4).

Dadurch werden die auf den Unterlenker wirkenden Kräfte an weit voneinander entfernten Punkten in den Schlepperkörper eingeleitet und der Schwenkzapfen der Vorderachse entlastet. Diese Entlastung kommt dem Schwenkzapfen der Vorderachse nicht nur bei angebautem Gerät zugute, sondern immer, wodurch dieser knapper dimensioniert werden kann bzw. sich die Achsführung verbessert, was den Fahreigenschaften des Schleppers generell zugutekommt.

Nach einem weiteren Merkmal der Erfindung ist (sind) auch der (die) Oberlenker am Hubwerksrahmen angelenkt (Anspruch 5). Dadurch können die Unterlenker beispielsweise an der Stelle der Schwenkachse fest miteinander verbunden werden und das ganze Hubwerk gewinnt dadurch an Festigkeit und Führung, und es wird verhindert, daß bei Überfahren von kupiertem Gelände eine Relativbewegung am Frontgerät stattfindet.

Nach einem weiteren Merkmal der Erfindung sind die Unterlenker abwärts gekröpfte Winkelhebel und Hubzylinder greifen am Unterlenker in der Gegend der Kröpfung an (Anspruch 6). Der Schwenkbereich des Hubwerkes wird dadurch ohne Behinderung durch die Vorderachse sehr groß und es ergibt sich eine günstige Anordnung des Hubzylinders, eine relativ geringe Belastung der Schwenklager und ein günstiger Biegemomentverlauf im Unterlenker.

In Weiterbildung der Erfindung stehen am Unterlenker verschiedene Anlenkpunkte für den Hubzylinder zur Auswahl (Anspruch 7). Dadurch kann mit einfachen Mitteln und ohne wesentliche Änderung der Kraftverhältnisse der Hubbereich den Abmessungen und Anforderungen des Anbaugerätes entsprechend verstellt werden.

Im folgenden wird die Erfindung anhand von Abbildungen näher erläutert:
- Fig. 1:: Erfindungsgemäßer Schlepper mit Fronthubwerk in einer ersten Ausführungsform,
- Fig. 2:: Vergrößerte Darstellung der erfindungswesentlichen Teile aus Figur 1.
- Fig. 3:: Draufsicht nach AA in Figur 1
- Fig. 4:: Schematische Darstellung der kinematischen Verhältnisse, und zwar
a) bei einem Fronthubwerk nach dem Stand der Technik
b) bei einem erfindungsgemäßen Hubwerk in der ersten Ausführungsform gemäß Figur 1
c) in einer zweiten Ausführungsform.

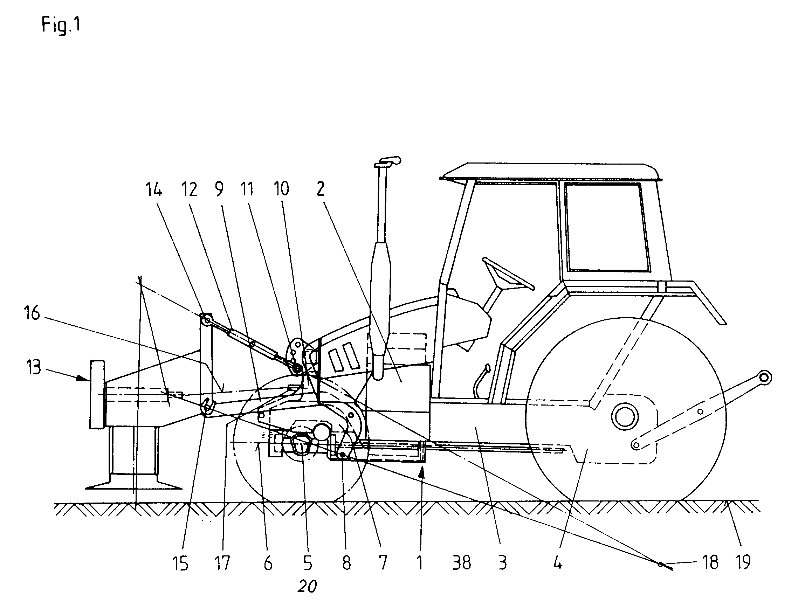

In Figur 1 ist der Schlepperkörper allgemein mit 1 bezeichnet.

Er besteht aus einem Motorblock 2, einem Getriebeblock 3 und einem starr damit verbundenen Hinterachsblock 4, wie bei Schleppern üblich. Vorne am Schlepperkörper 1 ist eine Vorderachse 5 um eine Längsachse 6 schwenkbar angebracht.

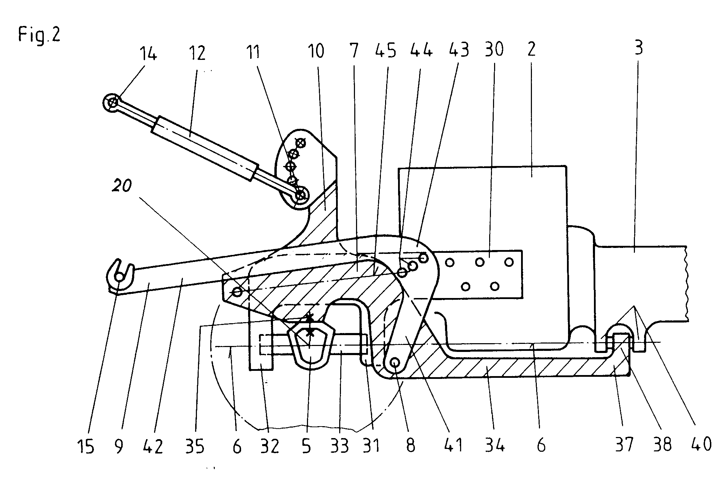

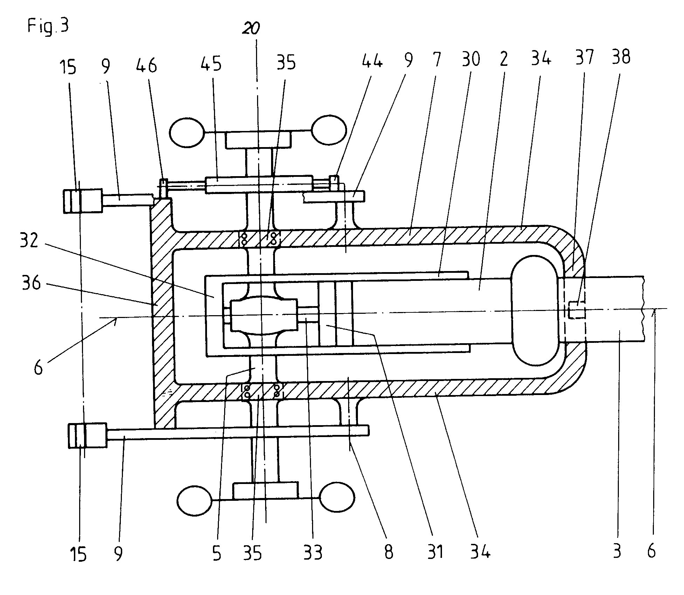

An einem Hubwerksrahmen 7 (der anhand der Figuren 2, 3 später beschrieben wird) sind Unterlenker 9 um eine Schwenkachse 8 drehbar gelagert. Ein Oberlenker 12 ist an einem Anlenkpunkt 11 gelagert, der in diesem Ausführungsbeispiel an einem Oberteil 10 des Hubwerksrahmens 7 angelenkt ist.

An einem äußeren Auge 14 des Oberlenkers 12 und an äußeren Augen 15 der Unterlenker 9 ist ein nur schematisch dargestelltes Trommelmähwerk 13 angebracht, welches mittels einer Gelenkwelle 16 von einem Zapfwellenstummel 17 aus angetrieben wird.

Es ist nun ein wesentliches Merkmal der Erfindung, daß die Schwenkachse 8 der Unterlenker hinter dem Radachsmittelpunkt 20 der Vorderachse 5 und tiefer als diese angeordnet ist. Durch diese Lage kann das Gelenkviereck mit den Gelenken 8,15, 14 und 11 so bemessen werden, daß die verlängerten Unterlenker 9 und Oberlenker 12 einander in einem Momentanpol 18 schneiden, der hinter dem Trommelmähwerk 13 und unter der Arbeitsfläche 19 liegt.

Bei dem erwähnten Gelenkviereck bildet der Hubwerksrahmen 7 mit seinem Oberteil 10 das Gestell eines Gelenkviereckes, Unterlenker 9 und Oberlenker 12 dessen Kurbeln und das Trommelmähwerk 13 den Steg bzw. die Koppel. Der Momentanpol ist dann nach den Regeln der Kinematik der Schnittpunkt der beiden verlängerten Kurbeln.

In Figur 2 und 3 wird eine Möglichkeit der konstruktiven Gestaltung genauer beschrieben. An dem Motorblock 2 ist ein Vorderachsschemel 30 angeschraubt, der einen hinteren und einen vorderen Lagerbock 31,32 für einen Vorderachszapfen 33 tragen, wie bei Schleppern üblich. Dabei ist die Achse des Vorderachszapfens 33 die Längsachse 6. Der Hubwerksrahmen 7 besteht aus zwei Längsträgern 34, die bei 35 mit der Vorderachse 5 verschraubt, also starr mit ihr verbunden sind. Ein vorderer Querträger 36 dient vorwiegend der Versteifung, ein hinterer Querträger 37 des Hubwerksrahmens 7 trägt ein Lagerauge 38. Dieses ist auf einem nicht sichtbaren Lagerzapfen, dessen Achse auch wieder die Längsachse 6 ist, und der von irgendeinem Teil des Schlepperkörpers 1 abstehenden Ohren 40 gehalten wird, gelagert. Somit ist die Vorderachse 5 mit dem Hubwerksrahmen 7 eine steife Baugruppe, die um die Längsachse 6 gegenüber dem Schlepperkörper schwenkbar ist.

An diesem Hubwerksrahmen 7 sind die Unterlenker 9 um eine Achse 8 schwenkbar gelagert. Sie bestehen aus einem angenähert vertikalen Teil 41 und einem angenähert horizontalen Teil 42, die eine Kröpfung 43 bilden, in der mehrere Anlenkpunkte 44 zur Auswahl stehen, um die Lage der Unterlenker 9 einem bestimmten Anbaugerät anzupassen. An diesen Anlenkpunkten 44 greifen Hubzylinder 45 an, was in Figur 2 nur durch die Achse des Zylinders versinnbildlicht ist, in Figur 3 ist der Hubzylinder 45 auf der in Fahrtrichtung rechten Seite zu sehen. Sein anderes Ende ist an einem Anlenkpunkt 46 des Hubwerksrahmens 7 angelenkt.

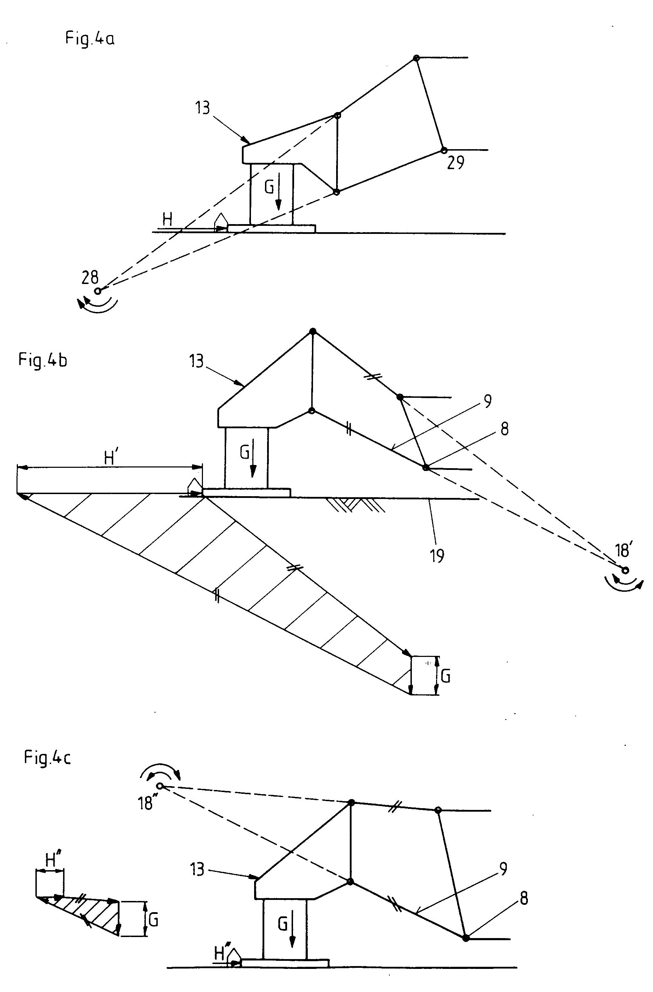

Der kinematische Hintergrund der Erfindung wird nun anhand der Figur 4 erläutert. Bei einem Fronthubwerk nach dem Stand der Technik ist die Schwenkachse des Unterlenkers 29 relativ hoch angeordnet, sodaß der Unterlenker abwärts gerichtet ist, wenn sich das Mähwerk in Arbeitsstellung befindet. Dadurch kommt der Momentanpol 28 in dem abgebildeten Beispiel unter der Arbeitsfläche und vor dem Mähwerk zu liegen oder, bei etwas anderer Anordnung des Oberlenkers hinter und über dem Mähwerk. Wenn man die Momente der Gewichtskraft G und einer horizontalen Kraft H um den Momentanpol 28 bildet, so wird klar, daß eine horizontale Kraft von vorne das Mähwerk in diesen beiden Fällen abwärts bewegt, sodaß es sich in den Boden bohrt.

Um das zu verhindern, ist erfindungsgemäß die Schwenkachse 8 des Unterlenkers 9 so tief angeordnet, daß sich der Momentanpol entweder in Fahrtrichtung hinter dem Mähwerk 13 und unter der Arbeitsfläche 19 (Figur 4b) oder über dem Mähwerk und vor diesem (Figur 4c) befindet.

Wenn man in Figur 4b bzw. 4c wieder die Momente der Gewichtskraft G und einer Horizontalkraft H' bzw. H'' um die Momentanpole 18' bzw. 18'' bildet, so erkennt man, daß in beiden Fällen eine von vorne auf das Mähwerk 13 wirkende Horizontalkraft ein Ausheben des Mähwerkes 13 bewirkt. Mit anderen Worten, in den beiden Fällen der Figuren 4b, 4c haben die Momente entgegengesetzte Vorzeichen.

Der Unterschied zwischen den beiden Ausführungsvarianten gemäß Figur 4b und 4c besteht in der Größe der zum Überwinden des Gewichtes notwendigen Horizontalkraft und den dadurch in den Lenkern 9,12 wirkenden Stabkräften. Diese Kräfte sind maßstabsgetreu als Kräfteplan eingezeichnet. Die Gewichtskraft G ist in beiden Fällen gleich, in Figur 4b ist zum Überwinden dieser Gewichtskraft G eine große Horizontalkraft H' erforderlich, wodurch auch die Stabkräfte in den Lenkern hoch sind; in der Ausführungsform der Figur 4c genügt zur Überwindung derselben Gewichtskraft G jedoch eine viel geringere Horizontalkraft H'', entsprechend sind auch die Stabkräfte klein.

## Patentansprüche

1. Schlepper mit Fronthubwerk für ein Arbeitsgerät, wobei der Schlepper aus einem Schlepperkörper und einer um eine Längsachse pendelnd an diesem gelagerten Vorderachse (5) besteht, und das Fronthubwerk aus Unterlenkern (9) mit vorderachsfester Schwenkachse (8) und mindestens einem Oberlenker (12) besteht, der ein Glied des das Hubwerk bildenden Gelenkviereckes (8,5,14,11) ist, **dadurch gekennzeichnet**, daß die Schwenkachse (8) der Unterlenker (9) in Fahrtrichtung hinter und tiefer als der Radachsenmittelpunkt (20) der Vorderachse (5) angeordnet ist.

2. Schlepper nach Anspruch 1, **dadurch gekennzeichnet**, daß die Verlängerungen von Unterlenker (9) und Oberlenker (12), wenn sich das Anbaugerät in Arbeitsstellung befindet, einander in einem Punkt (18') schneiden, der hinter und unter dem Arbeitsgerät (13) liegt.

3. Schlepper nach Anspruch 1, **dadurch gekennzeichnet**, daß die Verlängerungen von Unterlenker (9) und Oberlenker (12), wenn sich das Anbaugerät in Arbeitsstellung befindet, einander in einem Punkt (18'') schneiden, der vor und über dem Arbeitsgerät (13) liegt.

4. Schlepper nach Anspruch 1, **dadurch gekennzeichnet,** daß die Schwenkachse (8) an einem Hubwerksrahmen (7) ausgebildet ist, welcher mit der Vorderachse (5) verbunden und in einiger Entfernung hinter der Vorderachse (5) um die Längsachse (6) schwenkbar gelagert ist.

5. Schlepper nach Anspruch 4, **dadurch gekennzeichnet**, daß auch der (die) Oberlenker (12) am Hubwerksrahmen (7,10) angelenkt ist (sind).

6. Schlepper nach Anspruch 1, **dadurch gekennzeichnet**, daß die Unterlenker (9) abwärts gekröpfte Winkelhebel (41,42) sind und daß Hubzylinder (45) in der Gegend der Kröpfung (43) am Unterlenker (9) angreifen.

7. Schlepper nach Anspruch 6, **dadurch gekennzeichnet**, daß am Unterlenker (9) für den Hubzylinder (45) verschiedene Anlenkpunkte (44) zur Wahl stehen.

## Claims

1. A tractor with a front lifting unit for an implement, wherein the tractor consists of a tractor body and a front axle (5) mounted thereon so as to swing about a longitudinal axis, and the front lifting unit consists of lower links (9) with a swivel axis (8) fixed to the front axle and at least one top link (12) which is a component of the four-bar linkage (8,5,14,11) forming the lifting unit, characterized in that the swivel axis (8) of the lower links (9) is arranged behind, in the direction of travel, and lower down than the wheel axle centre (20) of the front axle (5).

2. A tractor according to claim 1, characterized in that the extensions of the lower link (9) and top link (12), when the attachment is in the working position, intersect at a point (18') situated behind and below the implement (13).

3. A tractor according to claim 1, characterized in that the extensions of the lower link (9) and top link (12), when the attachment is in the working position, intersect at a point (18'') situated in front of and above the implement (13).

4. A tractor according to claim 1, characterized in that the swivel axis (8) is designed to be on a lifting unit frame (7) which is connected to the front axle (5) and is mounted some distance behind the front axle (5) so as to swivel about the longitudinal axis (6).

5. A tractor according to claim 4, characterized in that the top link(s) (12) is (are) also linked to the lifting unit frame (7,10).

6. A tractor according to claim 1, characterized in that the lower links (9) are bell crank levers (41,42) which are bent downwards in the shape of an elbow, and in that lifting cylinders (45) act on the lower link (9) in the region of the elbow (43).

7. A tractor according to claim 6, characterized in that various linking points (44) for the lifting cylinder (45) are available to choose from on the lower link (9).

## Revendications

1. Tracteur équipé d'un dispositif de levage frontal pour un instrument de travail, dans lequel le tracteur est composé d'un corps de tracteur et d'un essieu avant (5) articulé sur ce corps de façon à pouvoir osciller autour d'un axe longitudinal, et le dispositif de levage frontal est composé de bras inférieurs (9) possédant un axe d'articulation (8) solidaire de l'essieu avant et d'au moins un bras supérieur (12) qui forme un élément du quadrilatère articulé (8, 5, 14, 11) formant le dispositif de levage, caractérisé en ce que l'axe d'articulation (8) des bras inférieurs (9) est situé en arrière de l'essieu avant (5), considéré dans le sens de la marche, et plus bas que le centre (20) des arbres de roues de cet essieu avant.

2. Tracteur selon la revendication 1, caractérisé en ce que les prolongements des bras inférieurs (9) et supérieur (12) se coupent en un point (18') qui est situé en arrière et au-dessous du niveau de l'instrument de travail (13), lorsque l'instrument porté se trouve en position de travail.

3. Tracteur selon la revendication 1, caractérisé en ce que les prolongements des bras inférieurs (9) et supérieur (12) se coupent en un point (18'') qui se trouve en avant et au-dessus du niveau de l'instrument de travail (13) lorsque l'instrument porté se trouve en position de travail.

4. Tracteur selon la revendication 1, caractérisé en ce que l'axe d'articulation (8) est formé sur un châssis (7) du dispositif de levage qui est relié à l'essieu avant (5) et est monté pivotant à une certaine distance en arrière de l'essieu avant (5) pour pouvoir osciller autour de l'axe longitudinal (6).

5. Tracteur selon la revendication 4, caractérisé en ce que le (ou les) bras supérieur(s) (12) est (sont) articulé(s) sur le châssis (7, 10) du dispositif de levage.

6. Tracteur selon la revendication 1, caractérisé en ce que les bras inférieurs (9) sont des leviers coudés (41, 42), recourbés vers le bas, et en ce que des vérins (45) attaquent les bras inférieurs (9) dans la région du coude (43).

7. Tracteur selon la revendication 6, caractérisé en ce qu'on peut choisir parmi différents points d'articulation (44) sur le bras inférieur (9) pour l'articulation du vérin (45).
